Europäisches Patentamt

European Patent Office

Office européen des brevets

(19)

(11) Veröffentlichungsnummer: **0 185 276**
**B1**

(12) **EUROPÄISCHE PATENTSCHRIFT**

(45) Veröffentlichungstag der Patentschrift: **18.04.90**

(21) Anmeldenummer: **85115580.4**

(22) Anmeldetag: **07.12.85**

(51) Int. Cl.⁵: **A 21 C 15/00**

(54) **Verfahren zum Schnellabkühlen von Brot oder dergleichen.**

(30) Priorität: **15.12.84 DE 3445860**

(43) Veröffentlichungstag der Anmeldung:
**25.06.86 Patentblatt 86/26**

(45) Bekanntmachung des Hinweises auf die
Patenterteilung:
**18.04.90 Patentblatt 90/16**

(84) Benannte Vertragsstaaten:
**AT CH DE FR LI NL SE**

(56) Entgegenhaltungen:
**EP-A-0 111 593**
**GB-A-2 134 636**
**US-A-4 079 666**

(73) Patentinhaber: **Hammel, Anton Dieter, Dr.**
**Wolfsgraben 11**
**D-3440 Eschwege (DE)**

(72) Erfinder: **Hammel, Anton Dieter, Dr.**
**Wolfsgraben 11**
**D-3440 Eschwege (DE)**

(74) Vertreter: **Goddar, Heinz J., Dr. et al**
**FORRESTER & BOEHMERT Widenmayerstrasse**
**4/I**
**D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 185 276 B1

**Beschreibung**

Die Erfindung betrifft ein gattungsgemäßes Verfahren nach dem Oberbegriff von Anspruch 1.

Brot, wie Weizenbrot, Weizenmischbrot, Roggenmischbrot oder dergleichen, aber auch andere Backwaren, bei denen die Erfindung sinngemäß ebenfalls anwendbar ist, ist bzw. sind beim Verlassen des Backofens im Inneren ca. 100°C warm und kann bzw. können erst in Scheiben geschnitten werden, wenn die Innentemperatur auf vorzugsweise 25°C, maximal 35°C, abgekühlt ist. Da es in fast allen Bäckereien, insbesondere auch in Großbäckereien, meist ein Platz für lange Brotabkühlstrecken oder zur Zwischenlagerung bzw. zur Vorbereitung von Brot vor dem Schneiden fehlt und im übrigen durch das Bäckereiarbeitszeitgesetz, welches einen Arbeitsbeginn nach 4 Uhr morgens vorschreibt, viele Brot- bzw. Backwarenhersteller gezwungen sind, in sehr kurzer Zeit Brot und Backwaren zu backen, abzukühlen, zu schneiden und zu verpacken, sofern des betreffende Brot, der Rosinen-Stuten oder dergleichen, geschnitten und verpackt ausgeliefert werden muß, wird die erforderliche Abkühlung des Brotes nicht durch bloßes Stehenlassen desselben nach dem Backvorgang, sondern Schnellabkühlung bewirkt.

Hierzu wird bei einem bekannten Verfahren der eingangs genannten Art so vorgegangen, daß das Brot lagenweise auf fahrbaren Brotwagen, sogenannten Schragen, gestapelt wird, die vor starke Ventilatoren gefahren werden, wo möglichst kalte Luft solange über die Brote geblasen wird, bis das Brot schnittfest ist; ein Nachteil dieses Verfahrens liegt darin, daß erhebliche Mengen an Kaltluft bereitgestellt werden müssen, die in einer Bäckerei nicht ohne weiteres zur Verfügung steht, womit ein erheblicher Energieaufwand verbunden ist. Auch gestaltet sich die Schnellabkühlung bei dem gattungsgemäßen Verfahren noch nicht in so kurzer Zeit, wie dies aus naheliegenden Gründen an sich wünschenswert ware.

Bei einem anderen Schnellabkühlverfahren wird so vorgegangen, daß das frisch gebackene Brot über lange Transportbänder gefahren wird, auf denen es durch die Umgebungsluft abkühlt, wobei diese zusätzlich mit Ventilatoren beaufschlagt werden, um den Kühlprozeß zu beschleunigen. Bei diesem Verfahren besteht der Nachteil, daß es notwendig ist, mit erheblichem Platzbedarf und konstruktivem Aufwand die erforderlichen Transportbandstrecken mit den zugeordneten Ventilatoren bereitzustellen.

Es ist auch ein Schnellabkühlverfahren bekannt, bei dem Brot in einer Kammer eingeschlossen wird, in der Vakuum erzeugt wird. Durch das angelegte Vakuum verdunstet die Feuchtigkeit in der Kammer, daß heißt die aus dem frisch gebakkenen Brot frei werdende Feuchtigkeit, wodurch sich infolge der entstehenden Verdunstungskälte die Luft und damit das Brot abkühlen, so daß das Brot bereits nach ca 15—25 Minuten schnittfähig ist. Dabei kann aber die Brotkruste leicht spröde und hartsplittrig werden, weil man ihr ja unmittelbar die freie Feuchtigkeit entzieht.

Aus der GB—A—2 134 636 ist ein Verfahren mit den im Oberbegriff von Anspruch 1 aufgeführten Merkmalen bekannt, bei dem das Benetzen des Brotes mit Wasser gleichzeitig mit dem Anblasen desselben mit Luft erfolgt. Da bei dieser Vorgehensweise das Wasser nicht in die Oberflächenschicht des Brotes eindringt, läßt sich ein Hartsplittrigwerden der Kruste des Brotes und ein Austrocknen im Inneren nicht vollständig vermeiden.

Der Erfindung liegt daher die Aufgabe zugrunde, das gattungsgemäße Verfahren dahingehend weiterzubilden, daß der Wassergehalt des Brotes im Inneren kontrolliert werden kann, die Kruste des Brotes nicht hartsplittrig wird und das Brot sich gut schneiden läßt.

Erfindungsgemäß wird diese Aufgabe bei einem Verfahren der gattungsgemäßen Art durch die im Kennzeichen von Anspruch 1 aufgeführten Merkmale gelöst.

Besonders bevorzugte Ausführungsformen der Erfindung ergeben sich dabei aus den Unteransprüchen.

Der Erfindung liegt die überraschende Erkenntnis zugrunde, daß es gelingt, die gestellte Aufgabe zu lösen und die beschriebenen Nachteile der bislang bekannten Schnellabkühlverfahren zu vermeiden, in dem die Verdampfungswärme des oberflächlich aufgegebenen Wassers anstelle der Feuchtigkeit, die aus dem Brot entweicht, bzw. anstelle speziell abgekühlter Anblasluft zur Abkühlung des Brotes verwendet wird. Im Gegensatz zu den bischer bekannten Verfahren wird unmittelbar auf der Oberfläche des Brotes ein Klima erzeugt, welches die gewünschte Abkühlung gewährleistet, wobei kein Atmosphärenaustausch mit all seinen Nachteilen erforderlich ist, vielmehr ausschließlich die Verdampfungsenthalpie des von außen aufgebrachten Wassers an der Oberfläche des Brotes ausgenutzt wird.

Es ist ferner gewährleistet, daß stets genügend Wasser da ist, um verdunsten bzw. verdampfen zu können, wodurch erreicht wird, daß das Brot in Inneren nicht austrocknet, die Kruste nicht hartsplittrig ist und das Brot sich gut schneiden läßt, wobei das Brot mehr Restfeuchtigkeit behält. Das erfindungsgemäße Kühlverfahren läßt sich auf relativ geringem Raum durchführen.

Nachstehend ist die Erfindung anhand eines Ausführungsbeispieles im einzelnen erläutert.

Beispiel:

Weizen-Vollkornbrot wurde in einem herkömmlichen Backofen gebacken und hatte nach dem Verlassen desselben in seinem Inneren eine Temperatur von 100°C. Unmittelbar nach dem Verlassen des Backofens wurde des Brot auf einen Backgutträger geführt, dessen Breite der Brotlänge entsprach. Das auf dem Backgutträger befindliche Brot wurde oberflächlich mit einem aus Düsen aufgebrachten Wasserfilm versehen, wobei die Temperatur des aufgebrachten Wassers ca. 18°C betrug. Im Anschluß hieran wurde das Oberflächenwasser durch Beaufschlagung mit Umgebungsluft mit einer Temperatur von ca.

28°C, die durch Ventilatoren aufgebracht wurde, verdunstet. Die vorgenannten Vorgänge wurden mehrfach wiederholt, woraufhin das Brot die gewünschte Innentemperatur hatte. Das so erhaltene Brot hatte eine hohe Restfeuchte im Inneren, eine einwandfreie Krustenbeschaffenheit und ließ sich hervorragend schneiden.

## Patentansprüche

1. Verfahren zum Schnellabkühlen von Brot oder dergleichen, bei dem das frisch gebackene Brot nach dem Verlassen des Backofens durch Benetzen mit backteriologisch reinem Wasser und Verdunsten desselben durch Anblasen mit Luft auf eine Innentemperatur von ca. 25—35°C abgekühlt wird, dadurch gekennzeichnet, daß das Benetzen derart erfolgt, daß ein Wasserfilm auf der Oberfläche des Brotes gebildet wird und das Benetzen und Verdunsten intervallartig durchgeführt wird.

2. Verfahren nach Anspruch 1, dadurch gekennzeichnet, daß zum Anblasen warme Umgebungsluft verwendet wird.

3. Verfahren nach Anspruch 1 oder 2, dadurch gekennzeichnet, daß das Brot nach dem Verlassen des Backofens auf einen Backgutträger geführt und dort dem Abkühlprozeß unterworfen wird.

## Revendications

1. Procédé pour refroidir rapidement le pain ou des produits similaires, dans lequel après avoir quitté le four de cuisson, le pain fraîchement cuit est refroidi à une température intérieure d'environ 25—35°C par humectage à l'aide d'une eau bactériologiquement pure et par évaporation de cette eau par soufflage d'air, procédé caractérisé en ce qu'on effectue l'humectation de manière qu'il se forme une pellicule d'eau à la surface du pain et en ce que le mouillage et l'évaporation sont réalisés à des intervalles de temps.

2. Procédé selon la revendication 1, caractérisé en ce qu'on utilise pour le soufflage de l'air ambiant chaud.

3. Procédé selon la revendication 1 ou 2, caractérisé en ce qu'après sa sortie du four de cuisson, le pain est acheminé vers un support de produits cuits et est soumis aux opérations du procédé de refroidissement.

## Claims

1. A method of rapidly cooling bread or the like, in which after leaving the oven the freshly baked bread is cooled to an internal temperature of about 25—35°C by wetting with bacteriologically pure water and evaporation thereof by the blowing on of air, characterised in that the wetting is so carried out as to form a film of water on the surface of the bread and the wetting and evaporation are performed interval-fashion.

2. A method according to claim 1, characterised in that hot ambient air is used for the blowing operation.

3. A method according to claim 1 or 2, characterised in that after leaving the oven the bread is passed on to a carrier for baked products and is subjected to the cooling process there.